# EUROPEAN PATENT SPECIFICATION

(11) **EP 0 859 698 B1**
(45) Date of publication and mention of the grant of the patent: **18.07.2001**
(21) Application number: 96938821.4
(22) Date of filing: 08.11.1996
(51) Int. Cl.: B29C 65/06

(54) **IMPROVED PERFORMANCE OF VIBRATION WELDED THERMOPLASTIC JOINTS**
VERGRÖSSERTE ZUVERLÄSSIGKEIT VON VIBRATIONSVERSCHWEISSTEN THERMOPLASTISCHEN VERBINDUNGEN
PERFECTIONNEMENT POUR LA REALISATION DE JOINTS THERMOPLASTIQUES VIBRO-SOUDES

(30) Priority: 08.11.1995 US 6334 P
(43) Date of publication of application: 26.08.1998
(73) Proprietor: Honeywell International Inc., Morristown, New Jersey 07962-2245 (US)
(72) Inventor: KAGAN, Valeriy, Morris Plains, NJ 07950 (US); BEDNARCZYK, Caroline, Edison, NJ 08837 (US); LUI, Siu-Ching, Watchung, NJ 07060 (US); SMITH, Gregory, R., Morristown, NJ 07960-5145 (US)
(74) Representative: Hucker, Charlotte Jane
(86) International application number: US9617925
(87) International publication number: WO9717189

(56) References cited:
- EP-A- 0 159 169
- DE-A- 3 242 478
- FR-A- 2 455 502
- GB-A- 1 488 546
- GB-A- 2 061 183
- WELDING PRODUCTION, vol. 29, no. 1, January 1982, CAMBRIDGE GB, pages 5-6, XP002024361 E.I. KULIC AND R.F. LOKSHIN: "Friction welding of plastics"
- WATSON: "Joining plastics in Production" , 1988 XP002024364 see page 73 - page 82 see page 73, paragraph 1 see page 76, line 31 - line 33
- KUNSTSTOFFE, vol. 84, no. 10, October 1994, pages 1464-1466, 1468/1469, XP000468219 KLOS W: "NEUE WEGE BEIM VIBRATIONSSCHWEISSEN NEW PATHWAYS FOR VIBRATION WELDING"
- WELDING AND METAL FABRICATION, vol. 57, no. 4, May 1989, pages 152-154, XP000036724 ROBINSON I: "LINEAR VIBRATION WELDING OF NON METALLIC COMPONENTS"
- PLASTVERARBEITER, vol. 45, no. 1, 1 January 1994, page 21/22, 24, 26 XP000426615 POTENTE H ET AL: "VIBRATIONSSCHWEISSEN VON POLYAMID 66"
- PLASTVERARBEITER, vol. 44, no. 6, 1 June 1993, pages 26-28, 30, 32/33, XP000412531 POTENE H ET AL: "VERGLEICHENDE UNTERSUCHUNG BEIM SCHWEISSEN VON GLASFASERVERSTARKTEM PES"
- DATABASE WPI Section Ch, Week 9538 Derwent Publications Ltd., London, GB; Class A35, AN 95-289015 XP002025725 & JP 07 186 263 A (TOYOTA JIDOSHA KK) , 25 July 1995
- PATENT ABSTRACTS OF JAPAN vol. 010, no. 109 (M-472), 23 April 1986 & JP 60 239224 A (YANMAR DIESEL KK), 28 November 1985,

## Description

### BACKGROUND OF THE INVENTION

The present invention relates to vibration welding or more particularly to vibration welding of thermoplastic joints.

The ongoing demand to use thermoplastics to replace metals in automotive vehicle applications such as air induction systems has increased in recent years. It is estimated that by the year 2010, 21.4 million air intake manifold components will be produced using welding techniques. This invention concerns an improved method of vibration welding thermoplastic joints, and the vibration welded articles produced by the method.

Vibration welding of thermoplastics such as nylon 6 and nylon 66 is well known in the art. See V. K. Stokes, "Vibration Welding of Thermoplastics, Part I: Phenomenology of the Welding Process", *Polymer Engineering and Science,* 28, 718 (1988); V. K. Stokes, "Vibration Welding of Thermoplastics, Part II: Analysis of the Welding Process", *Polymer Engineering and Science,* 28, 728 (1988); V. K. Stokes, "Vibration Welding of Thermoplastics, Part III: Strength of Polycarbonate Butt Welds", *Polymer Engineering and Science,* 28, 989 (1988); V. K. Stokes, "Vibration Welding of Thermoplastics, Part IV: Strengths of Poly(Butylene Terephthalate), Polyetherimide, and Modified Polyphenylene Oxide Butt Welds", *Polymer Engineering and Science,* 28, 998 (1988) and C. B. Bucknall, et al, "Hot Plate Welding of Plastics: Factors Affecting Weld Strength", *Polymer Engineering and Science,* 20, 432 (1980).

Vibration welding may be conducted by vibrating two parts under pressure along their common interface to generate frictional heat, and thereby melting and fusing their surfaces together. Vibration welding is a quick and inexpensive way to join irregularly shaped parts of various sizes. In the past, vibration welding has been used in low load-bearing applications. In automobile underhood applications such as air intake manifolds, air filter housings, and resonators, the expanded use of engineered plastics would be desirable to achieve savings and weight and cost. However, heretofore it has not been possible to achieve adequate weld strengths for such uses. Welding results are extremely sensitive to parameter uniformity and slight variations in them can result in significant changes in weld quality. Vibration welding parameters of pressure, frequency, amplitude, oscillation (welding) time, hold time and weld thickness all affect tensile strength of welds. It is an object of the present invention to provide a method for vibration welding fiber reinforced thermoplastic surfaces to provide welds having greater tensile strengths than have been heretofore achievable.

U.S. patent 4,844,320 teaches that weld strength are not affected by weld amplitude or weld time above a certain level. In conventional vibration welding, welds are formed at a vibration amplitude of 0.76 to 17.8 mm (.03 to .70 inch). In contrast we have found that weld amplitude and weld time are extraordinarily important criteria for increasing weld strength. The vibration welding of this invention uses a vibration amplitude of at least about 0.19 cm (.075 inch). It has been determined that conventional vibration welds of reinforced thermoplastic surfaces achieve a maximum tensile strength of approximately 80% of a weld formed by the unreinforced surfaces of corresponding thermoplastic materials. For glass fiber reinforced thermoplastics, this lowered tensile strength is attributed to a change in the glass fiber orientation at the welded joint. According to this invention, vibration welds of reinforced thermoplastic surfaces achieve a maximum tensile strength of as high as about 120% of a weld formed by the unreinforced surfaces of corresponding thermoplastic materials. This is because fibers from at least one of the surfaces are caused to penetrate both into the weld and into the other surface. This provides added, unexpected tensile strength to the weld.

### DESCRIPTION OF THE INVENTION

The invention provides a method of attaching a first surface comprising a fiber reinforced first thermoplastic composition to a second surface comprising a second thermoplastic composition which method comprises contacting the first and second surfaces and vibration welding the contacted first and second surfaces to form a weld between the first and second surfaces which weld comprises a blend of the first and second thermoplastic compositions, characterised in that vibration welding is conducted under conditions sufficient to cause fibers from the first surface to penetrate both into weld and the second surface.

The invention also provides a vibration welded article which comprises a first surface comprising a fiber reinforced first thermoplastic composition, and a second surface comprising a second thermoplastic composition in contact with the first surface, and a weld between the first and second surfaces comprising a blend of the first and second thermoplastic compositions, characterised in that fibers from the first surface penetrate both into the weld and the second surface.

Techniques of vibration welding and apparatus for conducting vibration welding are well known in the art as exemplified by U.S. patent 4,844,320 which is incorporated herein by reference. There are four phases to vibration welding of thermoplastics, namely heating of the interface by friction; unsteady melting and flow of material in the lateral direction; melt zone establishment at a steady state condition; and unsteady flow and solidification of the materials at the weld zone upon cessation of vibration. Welding may be conducted by standard vibration welding equipment which have been modified to achieve the parameter conditions required for the invention. The parameters of significance include pressure, amplitude, frequency, weld cycle time and hold time.

Vibration welders are commercially available from Branson Ultrasonics Corporation, Danbury, Connecticut, as a Mini-Vibration Welder and 90 series Vibration Welders model VW/6. However, these must be adjusted since their rated amplitude range is 0.10 to 0.18 cm (.040 to .070 inches) at 240 Hz output frequency. Vibration welding may be conducted by placing a first thermoplastic surface and a second thermoplastic surface into contact under pressure. At least one and preferably both of the thermoplastic surfaces are fiber reinforced. The surfaces to be welded are placed into contact with one another and the interface between the surfaces is kept at a predetermined pressure, for example by positioning them on a platform under pressure applied by air or hydraulic cylinders. Linear reciprocating motion is then imparted to one surface with respect to the other surface to create a frictional rubbing which generates heat, melts the surfaces and blends the thermoplastic materials from the first and second surfaces. Prior to welding, the fibers in the fiber reinforced thermoplastic materials are substantially unoriented.
In prior art vibration welding techniques, thermoplastic surfaces in contact melt and blend to form a weld, however, fibers positioned in the weld are only oriented within the plane of the weld. In contrast, when vibration welding is conducted according to this invention, fibers which reinforce the surface or surfaces are pressed into the opposite contacting surface. This achieves a heretofore unattainable weld strength when the weld cools.

According to the invention, the two thermoplastic surfaces which may be welded are composed of any compatible thermoplastic polymeric material. Suitable thermoplastic polymers nonexclusively include polyamides, polyesters, polycarbonates, polysulfones, polyimides, polyurethanes, polyethers, vinyl polymers, and mixtures thereof. Polyamides such as nylon 6 and nylon 66, for example Capron® 8233G HS nylon 6 and Capron® 5233G HS nylon 66 available from AlliedSignal Inc. of Morristown New Jersey and polyesters such as Petra® 130 polyethylene terephthalate available from AlliedSignal Inc. are most preferred. Dissimilar thermoplastic surface materials may be used provided they blend compatibly. At least one and preferably both of the thermoplastic surfaces are fiber reinforced. Suitable reinforcing fibers non-exclusively include materials which do not soften, i.e. lose their rigidity, at temperatures typically used for injection molding, such as temperatures of up to about 400 °C. Preferably the fiber reinforcement comprises such a material as glass, carbon, silicon, metals, minerals, polymeric fibers and mixtures thereof. Glass fiber reinforcement is most preferred. In the preferred embodiment, the fiber is rigid and has a diameter of from about 8 to about 12 micrometers, preferably from about 9 to about 11 micrometers and most preferably about 10 micrometers. The preferred fiber length is from about 120 to about 300 micrometers, more preferably from about 130 to about 250 micrometers and most preferably from about 140 to about 200 micrometers. In the preferred embodiment, the fibers comprises from about 6 to about 40 weight percent of the thermoplastic composition, more preferably from about 13 to about 25 weight percent of the thermoplastic composition.

The linear peak-to-peak displacement or distance of rub of one surface on the other is the vibration amplitude. In the preferred embodiment, the vibration amplitude is at least about 0.19 cm (.075). More preferably the vibration amplitude ranges from about 0.19 to about 0.38 cm (.075 to about .15 inch) and most preferably from about 0.19 to about 0.23 cm (.075 to about .090 inch). The foregoing amplitudes are at a nominal output vibration frequency of 240 Hz. At other vibration frequencies the amplitude would vary. For example, at a nominal output vibration frequency of 120 Hz, the preferred vibration amplitude would range from at least about 0.23 cm (.09 inch), more preferably from about 0.33 to about 0.41 cm (.13 inch to about .16 inch) and most preferably from about 0.34 to about 0.37 cm (.135 inch to about .145 inch). Vibration amplitudes for other frequencies can be easily determined by those skilled in the art.

In the preferred embodiment, the contacting surfaces are held under a pressure, normal to the surfaces, of from about .6 to about 1.5 MPa during vibration welding. More preferably the pressure ranges from about .6 to about 1.2 MPa and most preferably from about .7 to about .8 MPa. The time of oscillation or rubbing time preferably ranges from about 2 to about 7 seconds, more preferably from about 4 to about 6 seconds. The hold time, or cooling time during which the pressure is maintained after stopping oscillations preferably ranges from about 2 to about 8 seconds, more preferably from about 4 to about 5 seconds. The weld thickness preferably ranges from about 160 to about 400 micrometers, more preferably from about 200 to about 350 micrometers and most preferably from about 250 to about 330 micrometers. When vibration welding is conducted under the foregoing conditions, a portion of the fibers from the reinforced surface penetrate into the weld and the opposite surface. When both surfaces comprise reinforced thermoplastics, a portion of the fibers from each surface penetrate both into the weld and the opposite surface. In the preferred embodiment, the estimated (by tensile strength) proportion of fibers from one or both reinforced surfaces penetrating into the opposite surface ranges from about 2 % to about 8 % preferably from about 4 % to about 8 %, and more preferably from about 5 % to about 8 %. As a result of the vibration welding process of this invention, welds of a reinforced thermoplastic surface to another thermoplastic surface achieve a higher maximum tensile compared to a weld formed by unreinforced surfaces of corresponding thermoplastic materials. The tensile strength of vibration welds of reinforced thermoplastic surfaces range from at least about 85 % and preferably from about 85 % to about 120% of a weld formed by the unreinforced surfaces of corresponding thermoplastic materials. Without being held to a particular theory, it is hypothesized that the vibration welding parameters of this invention allow fiber penetration from one reinforced surface into the other surface. For example, pressure application, and vibration time and amplitude should be conducive to pushing fibers from one melted surface into the other. Weld thickness which is too low or fiber loading which is too high may result in insufficient space for fiber rotation and hence restrain fiber crossing into the opposite surface.

The following non-limiting examples serve to illustrate the invention. It will be appreciated that variations in proportions and alternatives in elements of the components of the photosensitive coating composition will be apparent to those skilled in the art and are within the scope of the present invention.

### EXAMPLE 1

Pellets of Capron® 8233G HS nylon 6 and Capron® 5233G HS nylon 66 available from AlliedSignal Inc. of Morristown New Jersey are injection molded into 7.6 cm x 10 cm x 0.6 cm (3" x 4" x 1/4") and 7.6 cm x 10 cm x 0.3 cm (3" x 4" x 1/8") blocks containing a nominal 0-50 weight % fiberglass reinforcement. Identical blocks are vibration welded together with a Mini-Vibration Welder or 2400 Series Welder from Branson Ultrasonics Corporation using the following parameters: maximum clamp load: 4.5 kN; weld amplitude: .762 to 2.28 mm (0.030" to 0.090"); weld time: 4-8 seconds, nominal weld frequency: 240 Hz. Welding parameters, i.e. pressure (loading), amplitude and time were varied to optimize tensile strength of the welded joints. Only those samples which achieved a tensile strength higher than that of the base unfilled materials were selected to then study morphology of the weld zones. Details of the zone interface and fiber orientation were included in this analysis. Optical microscopy was used to study the morphology of the samples, while image analysis was used to quantify fiber length.

### Analysis of Glass Fibers Loading at Weld Zone

The nominal fiber loading of the Capron® nylon 6 injection molded parts that were studied ranged from 0 to 50 weight %. However, the actual fiber loading at the weld zone may vary if either fibers or the nylon matrix are preferably pushed away from the weld zone as the joint is formed. In order to determine whether the fiber loading in the excess flow region at the weld is different than in the bulk material, the weight % of fibers was measured by taking the weight difference of the excess before and after the matrix was pyrolized. The results of seven Capron® 8233G HS nylon 6 samples processed under different welding conditions are summarized in Table 1. The results show that fiber loading of the various nylon 6 materials examined are approximately 0.5 wt.% to 1 wt.% lower than the bulk composition.

For nylon 66, the glass content in the weld zone flash was measured from Capron® 5233G HS nylon 66 samples. The results are given in Table 2 and show that fiber loading of nylon 66 at the weld zone flash are approximately 0.5 wt.% lower than the bulk composition. These fiber content variations are rather small and are close to the accuracy of the fiber content measurement.

### Analysis of Glass Fiber Length at the Weld Zone

In order to determine whether there may be excessive breakage of fiber at the weld zone, an analysis of fiber length was conducted. Fiber length determination of fibers from the flash (recovered from pyrolysis ash) was measured by optical microscopy and by image analysis. Glass fiber samples were drawn from the ash and dispersed onto a glass slide with 2,2,2-trifluoroethanol (TFE) solvent. Ten optical micrographs were taken of each sample and a total of 1000-2000 fibers were digitized and measured by the image analyzer. Table 3 summarizes the results. The analysis indicates that averaged fiber lengths of all samples are within the range of 120 to 180 micrometers. This is comparable to the fiber length average of samples measured from the original molded tensile bars away from the area of the weld zone. Furthermore, a study of the weld zone fracture surface by scanning electron microscopy suggested that there is no excessive breakage of fibers at the weld zone.

### Analysis of Glass Fiber Orientation Distribution at the Weld Zone

The Fiber Orientation Distribution (FOD) of glass fibers (GF) at the weld zone was studied by optical and scanning electron microscopy. For each sample, both planar and through thickness sections were prepared and metallographically polished in preparation for optical microscopy study. Optical micrographs at relatively low magnifications (25x and 50x) show the general FOD around the weld zone as well as fiber orientation at the weld zone. Optical micrographs are taken from polished sections of nylon 6 samples with 6 wt.% GF, 14 wt.% GF, 25 wt.% GF, 33 wt.% GF and 50 wt.% GF, respectively. Micrographs show the fiber orientation both close to and away from the weld zone. Additionally the apparent thickness of the weld zone can be measured directly from the FOD changes with position shown in the micrograph. It is noted that for samples with 14 and 25 wt. % GF, there is apparent evidence of some fibers oriented in the tensile direction perpendicular to the weld plane. It was noted that the effects of reinforcement at optimized welding conditions appeared independent of the glass fiber orientation in the molded plaques which were selected for welded.

### Tensile Strength of Weld Joints

For each vibration weld condition (i.e. a set pressure, amplitude and weld time), ten specimens were tested under the standard ASTM D638M-93 tensile testing procedure for plastics. Table 4 summarizes the results for weld joint tensile strength at optimized weld parameters. The influence of glass fiber loading on tensile strength is examined. These results indicate that all the weld joint samples have a tensile strength higher than that of unreinforced nylon 6. For the reinforced nylon 6 materials, the maximum tensile strength is 93.1 MPa. This occurs around 14 wt.% to 25 wt.% glass fiber loading. By comparison with the unreinforced material, which has a tensile strength of 79.3 MPa, this highest weld strength found in the reinforced grades represents a 17% increase in weld joint tensile strength.

The tensile strength of welded nylon 6 materials appears to be slightly higher (approx. 4%) than that of welded nylon 66 under the same welding and reinforcing conditions. The data also show that, at the interface, the glass fiber/nylon 66 composition is similar to that of the bulk composite. The observed higher weld strength of the glass filled nylon 6 at optimum welding process conditions may be attributed to several factors. For nylon 6, at some compositions and welding parameter choices, a percentage of the glass fibers appear to cross the weld plane at the interface. The width of the weld zone, which is around 200-300 micrometers, is comparable to the average length of fibers. This may permit some mobility of the fiber to move in directions other than the primary resin flow direction during the weld, i.e., the fibers are not so confined to move along the flow direction as in a narrow weld zone. The weld zone thickness observed from the micrographs may be plotted as a function of fiber loading. It is noted that the weld zone thickness does go through a maximum at 14 wt.% fiber loading. This maximum occurs at the same location (14 wt.% to 25 wt.% glass fiber (GF)) as does the tensile curve maximum. This further suggests that the thickness of weld zone has a positive influence on the tensile strength of the welded joint. By preparing weld specimens at different orientations to the predominant fiber orientation, studies of weld performance as a function of the glass fiber orientation distribution in the GF nylon 6 plaques were permitted. Results of this data suggest that at the welding interface the fiber orientation achieved in the region of the weld zone becomes independent of the predominant orientation of glass fiber in the bulk nylon 6, adjacent to the weld. This data for linear vibration welded polyamide butt joints shows an increase in tensile strength up to 35% in comparison with prior published data.

**TABLE 1**

| Percentage of Glass Fiber in the Flash for Capron® 8233G HS (nylon 6) | |
|---|---|
| Sample No. | Wt. % Fiber in the Flash |
| 1 | 32.04 |
| 2 | 32.52 |
| 3 | 32.26 |
| 4 | 32.56 |
| 5 | 32.54 |
| 6 | 32.20 |
| 7 | 31.93 |
| Average | 32.29±0.25 |
| Capron® 8233G HS Bulk | 33.01 ± 1.21 |

**TABLE 2**

| Percentage of Glass Fiber in the Flash for Capron® 5233G HS (nylon 66) | | |
|---|---|---|
| Sample ID | wt.% of Glass Fiber in Flash | wt.% of Glass Fiber in Bulk |
| 5233 GHS | 33.48 | 33.94 |

**TABLE 3**

| Fiber Length Analysis for Capron® 8233G HS (nylon 6) | | |
|---|---|---|
| Sarnple ID | No. of Fibers | Averaged Length of Fiber (micrometers) |
| 1 | 1775 | 124.7 |
| 2 | 1838 | 131.8 |
| 3 | 1106 | 151.9 |
| 4 | 1182 | 147.7 |
| 5 | 1018 | 167.8 |
| 6 | 1381 | 145.9 |
| 7 | 834 | 180.25 |
| Capron® 8233G HS Bulk | 1374 | 133.7 |

**TABLE 4**

| wt.% Glass Fiber | Trade Name | Tensile Strength, MPa at Optimized Welding Conditions |
|---|---|---|
| 0 | Capron® 8202 HS | 79.3 |
| 6 | Capron® 8230G HS | 83.1 |
| 14 | Capron® 8231G HS | 90.7 |
| 25 | Capron® 8232G HS | 90.2 |
| 33 | Capron® 8233G HS | 85.2 |
| 50 | Capron® 8235G HS | 80.5 |

## Claims

1. A method of attaching a first surface comprising a fiber reinforced first thermoplastic composition to a second surface comprising a second thermoplastic composition which method comprises contacting the first and second surfaces and vibration welding the contacted first and second surfaces to form a weld between the first and second surfaces which weld comprises a blend of the first and second thermoplastic compositions, characterised in that vibration welding is conducted under conditions sufficient to cause fibers from the first surface to penetrate both into the weld and the second surface.

2. The method of claim 1 wherein each of the first and second thermoplastic compositions comprises a thermoplastic polymer selected from the group consisting of polyamides, polyesters, polycarbonates, polysulfones, polyimides, polyurethanes, polyethers, vinyl polymers, and mixtures thereof.

3. The method of claim 1 or claim 2 wherein the fiber comprises a material selected from the group consisting of glass, carbon, silicon, metals, minerals, polymers and mixtures thereof.

4. The method of any of claims 1 to 3 wherein the fiber is present in the reinforced first thermoplastic composition in an amount of from about 6 to about 40 weight percent based on the weight of the first thermoplastic composition.

5. The method of any preceding claim wherein fiber is present in both the reinforced first thermoplastic composition and the reinforced second thermoplastic composition in an amount of from about 6 to about 40 weight percent based on the weight of the respective thermoplastic composition.

6. A vibration welded article which comprises a first surface comprising a fiber reinforced first thermoplastic composition, and a second surface comprising a second thermoplastic composition in contact with the first surface, and a weld between the first and second surfaces comprising a blend of the first and second thermoplastic compositions, characterised in that fibers from the first surface penetrate both into the weld and the second surface.

7. The article of claim 6 wherein the second thermoplastic composition is fiber reinforced and wherein fibers from the second surface penetrate both into the weld and the first surface.

8. The article of claim 6 or claim 7 wherein each of the first and second thermoplastic compositions comprises a thermoplastic polymer selected from the group consisting of polyamides, polyesters, polycarbonates, polysulfones, polyimides, polyurethanes, polyethers, vinyl polymers, and mixtures thereof.

9. The article of any of claims 6 to 8 wherein the fiber comprises a material selected from the group consisting of glass, carbon, silicon, metals, minerals, polymers and mixtures thereof.

## Patentansprüche

1. Verfahren zum Anbringen einer ersten Fläche, die eine faserverstärkte erste thermoplastische Zusammensetzung enthält, an einer zweiten Fläche, die eine zweite thermoplastische Zusammensetzung enthält, bei dem man die erste und die zweite Fläche in Berührung bringt und die miteinander in Berührung gebrachte erste und zweite Fläche unter Bildung einer eine Mischung aus der ersten und der zweiten thermoplastischen Zusammensetzung enthaltenden Schweißnaht zwischen der ersten und der zweiten Fläche vibrationsverschweißt, dadurch gekennzeichnet, daß man das Vibrationsschweißen unter Bedingungen durchführt, unter denen Fasern aus der ersten Fläche sowohl in die Schweißnaht als auch in die zweite Fläche eindringen.

2. Verfahren nach Anspruch 1, bei dem die erste und die zweite thermoplastische Zusammensetzung jeweils ein thermoplastisches Polymer aus der Gruppe bestehend aus Polyamiden, Polyestern, Polycarbonaten, Polysulfonen, Polyimiden, Polyurethanen, Polyethern, Vinylpolymeren und deren Gemischen enthält.

3. Verfahren nach Anspruch 1 oder 2, bei dem die Faser ein Material aus der Gruppe bestehend aus Glas, Kohlenstoff, Silicium, Metallen, Mineralien, Polymeren und deren Gemischen enthält.

4. Verfahren nach einem der Ansprüche 1 bis 3, bei dem die Faser in der verstärkten ersten thermoplastischen Zusammensetzung in einer Menge von etwa 6 bis etwa 40 Gewichtsprozent, bezogen auf das Gewicht der ersten thermoplastischen Zusammensetzung, vorliegt.

5. Verfahren nach einem der vorhergehenden Ansprüche, bei dem die Faser sowohl in der verstärkten ersten thermoplastischen Zusammensetzung als auch in der verstärkten zweiten thermoplastischen Zusammensetzung in einer Menge von etwa 6 bis etwa 40 Gewichtsprozent, bezogen auf das Gewicht der jeweiligen thermoplastischen Zusammensetzung, vorliegt.

6. Vibrationsverschweißter Gegenstand mit einer ersten Fläche, die eine faserverstärkte erste thermoplastische Zusammensetzung enthält, einer mit der ersten Fläche in Berührung stehenden zweiten Fläche, die eine zweite thermoplastische Zusammensetzung enthält, und einer eine Mischung aus der ersten und der zweiten thermoplastischen Zusammensetzung enthaltenden Schweißnaht zwischen der ersten und der zweiten Fläche, dadurch gekennzeichnet, daß Fasern aus der ersten Fläche sowohl in die Schweißnaht als auch in die zweite Fläche eindringen.

7. Gegenstand nach Anspruch 6, bei dem die zweite thermoplastische Zusammensetzung faserverstärkt ist und Fasern aus der zweiten Fläche sowohl in die Schweißnaht als auch in die erste Fläche eindringen.

8. Gegenstand anch Anspruch 6 oder 7, bei dem die erste und die zweite thermoplastische Zusammensetzung jeweils ein thermoplastisches Polymer aus der Gruppe bestehend aus Polyamiden, Polyestern, Polycarbonaten, Polysulfonen, Polyimiden, Polyurethanen, Polyethern, Vinylpolymeren und deren Gemischen enthält.

9. Gegenstand nach einem der Ansprüche 6 bis 8, bei dem die Faser ein Material aus der Gruppe bestehend aus Glas, Kohlenstoff, Silicium, Metallen, Mineralien, Polymeren und deren Gemischen enthält.

## Revendications

1. Procédé de fixation d'une première surface comprenant une première composition thermoplastique renforcée par des fibres à une seconde surface comprenant une seconde composition thermoplastique, procédé qui comprend la mise en contact des première et seconde surfaces et le soudage par vibration des première et seconde surfaces mises en contact pour former une soudure entre les première et seconde surfaces, soudure qui comprend un mélange des première et seconde compositions thermoplastiques, caractérisé en ce que le soudage par vibration est conduit sous des conditions suffisantes pour provoquer la pénétration des fibres de la première surface à la fois dans la soudure et dans la seconde surface.

2. Procédé selon la revendication 1, dans lequel chacune des première et seconde compositions thermoplastiques comprend un polymère thermoplastique choisi parmi le groupe consistant en polyamides, polyesters, polycarbonates, polysulfones, polyimides, polyuréthannes, polyéthers, polymères de vinyle et les mélanges de ceux-ci.

3. Procédé selon la revendication 1 ou la revendication 2, dans lequel la fibre comprend un matériau choisi parmi le groupe consistant en verre, carbone, silicium, métaux, minéraux, polymères et mélanges de ceux-ci.

4. Procédé selon l'une quelconque des revendications 1 à 3, dans lequel la fibre est présente dans la première composition thermoplastique renforcée dans une quantité d'environ 6 à environ 40% en poids sur base du poids de la première composition thermoplastique.

5. Procédé selon l'une quelconque des revendications précédentes, dans lequel la fibre est présente à la fois dans la première composition thermoplastique renforcée et dans la seconde composition thermoplastique renforcée dans une quantité d'environ 6 à environ 40% en poids sur base du poids de la composition thermoplastique respective.

6. Article vibro-soudé qui comprend une première surface comprenant une première composition thermoplastique renforcée, et une seconde surface comprenant une seconde composition thermoplastique en contact avec la première surface, et une soudure entre les première et seconde surfaces comprenant un mélange des première et seconde compositions thermoplastiques, caractérisé en ce que les fibres de la première surface pénètrent à la fois dans la soudure et dans la seconde surface.

7. Article selon la revendication 6, dans lequel la seconde composition thermoplastique est renforcée par des fibres et dans lequel les fibres de la seconde surface pénètrent à la fois dans la soudure et dans la première surface.

8. Article selon la revendication 6 ou la revendication 7, dans lequel chacune des première et seconde compositions thermoplastiques comprend un polymère thermoplastique choisi parmi le groupe consistant en polyamides, polyesters, polycarbonates, polysulfones, polyimides, polyuréthannes, polyéthers, polymères de vinyle et les mélanges de ceux-ci.

9. Article selon l'une quelconque des revendications 6 à 8, dans lequel la fibre comprend un matériau choisi parmi le groupe consistant en verre, carbone, silicium, métaux, minéraux, polymères et mélanges de ceux-ci.
